(19) **Europäisches Patentamt / European Patent Office / Office européen des brevets**

(11) **EP 3 185 003 B1**

(12) **FASCICULE DE BREVET EUROPEEN**

(45) Date de publication et mention
de la délivrance du brevet:
**20.06.2018 Bulletin 2018/25**

(51) Int Cl.:
***G01N 23/20*** *(2018.01)*

(21) Numéro de dépôt: **16206499.2**

(22) Date de dépôt: **22.12.2016**

(54) **PROCÉDÉ D'ANALYSE D'UN OBJET PAR DIFFRACTION X**

ANALYSEVERFAHREN EINES OBJEKTS DURCH RÖNTGENBEUGUNG

METHOD FOR ANALYSING AN OBJECT BY X-RAY DIFFRACTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2015 FR 1563317**

(43) Date de publication de la demande:
**28.06.2017 Bulletin 2017/26**

(73) Titulaire: **Commissariat à l'énergie atomique
et aux énergies alternatives
75015 Paris (FR)**

(72) Inventeurs:
• **BARBES, Damien**
  **38000 GRENOBLE (FR)**
• **PAULUS, Caroline**
  **38000 GRENOBLE (FR)**
• **TABARY, Joachim**
  **38100 GRENOBLE (FR)**

(74) Mandataire: **GIE Innovation Competence Group
310, avenue Berthelot
69372 Lyon Cedex 08 (FR)**

(56) Documents cités:
**EP-A2- 2 743 687       WO-A1-2013/098520
WO-A1-2014/045045    US-A- 6 078 638
US-A1- 2012 051 517**

**Description**

## DOMAINE TECHNIQUE

Le domaine technique de l'invention est l'analyse d'un objet par une analyse spectrométrique d'un rayonnement ionisant diffracté par ledit objet. L'invention s'applique aussi bien à l'analyse de tissus biologiques, à des fins de diagnostic, qu'au contrôle non destructif dans le domaine industriel ou pour des applications liées à la sécurité.

## ART ANTERIEUR

La spectrométrie de diffraction X, plus connue selon l'acronyme EDXRD (Energy Dispersive X Ray Diffraction) est une technique d'analyse non destructive utilisée pour l'identification de matériaux composant un objet. Cette technique est basée sur la diffusion élastique d'un rayonnement électromagnétique ionisant, aussi appelée diffusion Rayleigh. Elle a déjà été appliquée dans la détection d'explosifs ou d'autres substances illicites. D'une façon générale, cette technique consiste à irradier un objet à l'aide d'un rayonnement X polyénergétique et à déterminer le spectre en énergie d'un rayonnement diffusé, par l'objet, selon de faibles angles, typiquement compris entre 1° et 20°, par rapport à la trajectoire du rayonnement X incident à l'objet. L'analyse de ce spectre permet d'identifier les matériaux constituant l'objet. En effet, la plupart des matériaux présentent une signature spectrale déterminée, dépendant de leur structure atomique ou moléculaire. La comparaison des spectres de diffusion mesurés avec des signatures de matériaux connus permet de remonter à la composition de l'objet.

Dans les dispositifs connus jusqu'à ce jour, une source d'irradiation produit un rayonnement X polyénergétique se propageant vers un objet, un collimateur primaire, ou pré-collimateur étant disposé entre la source et l'objet, de façon à former un faisceau de rayonnement X finement collimaté vers l'objet. Un deuxième collimateur est ensuite placé entre l'objet analysé et un détecteur, ce dernier étant apte à acquérir un spectre en énergie du rayonnement diffusé par l'objet.

Le document WO2013098520 décrit un procédé permettant l'obtention de spectres de diffraction X émis par un objet, à l'aide d'un détecteur comportant des pixels, chaque pixel étant subdivisé en pixels dits virtuels. Ce document présente une méthode dans laquelle le deuxième collimateur définit une ouverture relativement large, la subdivision en pixels virtuels permettant d'améliorer la résolution angulaire. La combinaison de spectres obtenus sur plusieurs pixels adjacents permet d'obtenir des spectres de résolution élevée. Le procédé permet d'identifier la présence de différents matériaux dans un même objet analysé, mais elle ne permet pas de donner une information spatiale précise sur la composition de l'objet.

Le document WO2016001536 décrit un procédé de caractérisation d'un objet à partir de spectres de diffraction X. Le procédé est basé sur l'établissement d'un modèle direct d'un dispositif de diffraction X, ce qui nécessite une calibration de la réponse du dispositif en énergie ainsi qu'une calibration d'une réponse angulaire du dispositif.

Le document WO2014045045 décrit un dispositif de caractérisation d'un objet à partir de spectres de diffraction X. Ce dispositif comporte un collimateur de type pinhole (ou sténopé) entre un objet et des détecteurs.

Les inventeurs ont cherché à perfectionner le procédé décrit dans WO2013098520 et proposent un procédé alternatif d'analyse d'un objet, et en particulier un objet composite, susceptible d'être formé par différents matériaux. Ce procédé présente une résolution spatiale améliorée, permettant une segmentation plus précise de l'objet en volumes élémentaires, ainsi qu'une reconstruction de la nature des matériaux de chacun de ces volumes élémentaires.

## EXPOSE DE L'INVENTION

Un premier objet de l'invention est un procédé d'analyse d'un objet comprenant les étapes suivantes :

a) disposition de l'objet face à une source d'irradiation, ladite source d'irradiation émettant un rayonnement électromagnétique ionisant se propageant vers l'objet selon un axe de propagation ;
b) disposition d'un détecteur comprenant une pluralité de pixels, de façon que chaque pixel soit apte à détecter un rayonnement diffusé par l'objet ainsi irradié, ledit rayonnement diffusé se propageant selon une direction formant un angle, dit angle de diffusion, aigu par rapport audit axe de propagation ;
c) acquisition, par plusieurs pixels du détecteur, d'un spectre de diffusion représentatif d'une distribution en énergie dudit rayonnement diffusé, chaque spectre étant associé à un pixel ;
d) décomposition de l'objet en volumes élémentaires et association, à chaque pixel, d'une fonction de dispersion dont la valeur, pour chaque volume élémentaire, représente une contribution dudit volume élémentaire au rayonnement diffusé détecté par chaque pixel ;
e) à partir des spectres de diffusion acquis et des fonctions de dispersion associées à chaque pixel, détermination d'une signature de diffusion associée à chaque volume élémentaire, représentative d'un matériau constituant ledit volume élémentaire ;

f) à partir des signatures de diffusion associées à chaque volume élémentaire, estimation d'une nature du matériau constituant les différents volumes élémentaires de l'objet.

Selon un mode de réalisation, l'étape e) comporte, sur la base de chaque spectre de diffusion acquis par un pixel, une détermination d'une fonction de diffusion associée à chaque pixel en combinant ledit spectre de diffusion avec un spectre de référence acquis par ledit pixel, en plaçant un objet de référence, constitué d'un matériau de référence, à la place de l'objet. La détermination de ladite fonction de diffusion associée à chaque pixel peut alors comporter :

- une prise en compte d'une fonction de diffusion, dite de référence établie, pour ledit pixel, relativement audit matériau de référence ;
- et éventuellement l'établissement d'un ratio, terme à terme, du spectre de diffusion, acquis par ledit pixel, par ledit spectre de référence, le ratio étant multiplié, terme à terme, par ladite fonction de réponse de référence établie pour ledit pixel. Ce ratio peut faire l'objet d'un changement de variable entre l'énergie et le transfert de quantité de mouvement préalablement à ladite multiplication terme à terme.

Le matériau de référence est connu, et en particulier sa signature de diffusion. Par signature de diffusion, on entend une distribution d'une grandeur spectrale représentative d'un matériau. La signature de diffusion est généralement exprimée selon une variable dite de transfert de quantité de mouvement, décrite ci-après. La signature de diffusion du matériau de référence est mesurée avant ou après la mise en oeuvre des étapes a) à c).

L'étape e) peut comporter une prise en compte d'une fonction spectrale d'atténuation de l'objet ainsi qu'une fonction spectrale d'atténuation de l'objet de référence. Ces fonctions représentent respectivement une atténuation du rayonnement émis par la source d'irradiation, par l'objet et par l'objet de référence. Le ratio précédemment évoqué peut alors être multiplié, terme à terme, par un ratio de ces fonctions spectrales d'atténuation.

L'étape e) peut comporter :

- l'établissement d'une matrice de réponse à partir des fonctions de diffusion associées à chaque pixel ;
- l'établissement d'une matrice dite de dispersion à partir des fonctions de dispersion associées à chaque pixel ;
- l'estimation d'une matrice comportant les signatures de diffusion de chaque volume élémentaire, de telle sorte que le produit matriciel de ladite matrice de dispersion par ladite matrice de signatures de diffusion de chaque volume élémentaire corresponde sensiblement à ladite matrice de réponse.

Selon un mode de réalisation, la fonction de dispersion associée à un pixel est élaborée en plaçant un objet de calibration successivement à différentes positions, le long dudit l'axe de propagation, de telle sorte que chaque position corresponde à un volume élémentaire de l'objet analysé, et en effectuant, à chaque position, les étapes suivantes :

i) irradiation dudit matériau de calibration et acquisition, par ledit pixel, d'un spectre, dit spectre de calibration du rayonnement diffusé par ledit objet de calibration, placé dans ladite position ;
ii) sur chaque spectre de calibration, identification d'un pic de calibration caractéristique dudit objet de calibration, ce pic correspondant notamment à une énergie de diffusion caractéristique d'un matériau composant d'objet de calibration ;
iii) détermination de l'intensité dudit pic de calibration ;

la fonction de dispersion étant obtenue à partir de différentes intensités du pic de calibration respectivement obtenues, pour ledit pixel, à chaque position dudit objet de calibration.

L'étape f) peut comprendre, pour chaque volume élémentaire, une comparaison entre la signature de diffusion associée audit volume élémentaire, obtenue lors de l'étape e), avec une ou plusieurs signatures de diffusion pré-établies, correspondant chacune à un matériau connu.

Selon une configuration préférée, le détecteur comprend une pluralité de pixels physiques, chaque pixel physique étant associé à un circuit de traitement électronique, chaque pixel physique étant divisé en une pluralité de pixels virtuels. Les pixels auxquels il a été précédemment fait référence sont alors des pixels virtuels.

Le procédé peut également comprendre l'une des caractéristiques suivantes, prises isolément ou en combinaison :

- Le rayonnement diffusé par l'objet et atteignant les pixels passe à travers une ouverture d'un deuxième collimateur, disposé entre le détecteur et l'objet, l'ouverture s'étendant, entre le détecteur et l'objet, selon un axe médian incliné par rapport à l'axe de propagation du faisceau incident collimaté. L'ouverture peut notamment définir une plage angulaire, de telle sorte qu'un rayonnement de diffusion atteignant le détecteur est émis selon un angle de diffusion appartenant à ladite plage angulaire, un rayonnement de diffusion émis selon un angle en dehors de ladite plage angulaire étant atténué par ledit collimateur.

- Le détecteur s'étend selon un plan de détection incliné d'un angle inférieur à 90° par rapport à l'axe de propagation précédemment évoqué.
- La fonction spectrale d'atténuation de l'objet est obtenue en mesurant respectivement un spectre du rayonnement émis par la source et un spectre d'un rayonnement transmis par l'objet selon ledit axe de propagation.
- L'irradiation de l'objet par la source d'irradiation est réalisée à travers un premier collimateur, de façon à former un faisceau incident collimaté se propageant vers l'objet selon ledit axe de propagation.

Un autre objet de l'invention est un support d'enregistrement d'informations, comportant des instructions pour l'exécution d'un procédé tel que décrit dans cette demande, ces instructions étant aptes à être exécutées par un processeur.

Un autre objet de l'invention est un dispositif d'analyse d'un objet comportant :

- une source d'irradiation, apte à produire un rayonnement électromagnétique ionisant se propageant vers un support apte à recevoir ledit objet ;
- un premier collimateur, disposé entre la source d'irradiation et le support, le premier collimateur présentant une ouverture apte à former un faisceau collimaté se propageant selon un axe de propagation, vers le support ;
- un deuxième collimateur, disposé entre le support et un détecteur, le deuxième collimateur présentant une ouverture s'étendant entre ledit support et ledit détecteur, selon un axe médian incliné par rapport audit axe de propagation ;
- le détecteur, comprenant des pixels, chaque pixel étant apte à détecter un rayonnement électromagnétique diffusé par l'objet à travers ladite ouverture, et à en acquérir un spectre en énergie, dit spectre de diffusion ;

caractérisé en ce que le dispositif comporte un microprocesseur apte à effectuer, à partir desdits spectres de diffusion acquis par chaque pixel, les étapes d) à f) du procédé décrit dans cette description.

Ledit axe médian peut former un angle aigu, dit angle de collimation, vis-à-vis dudit axe de propagation. Cet angle peut notamment être strictement supérieur à 0° et inférieur à 20°

Le dispositif peut comporter un détecteur auxiliaire apte à acquérir un spectre, dit spectre d'atténuation, d'un rayonnement transmis par l'objet selon la direction de l'axe de propagation du faisceau incident collimaté.

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

## FIGURES

La figure 1A représente un exemple de dispositif selon l'invention. La figure 1B représente un détail de la figure 1A, en illustrant le champ d'observation de chaque pixel ainsi que la décomposition de l'objet en volumes élémentaires.

Les figures 1C et 1D représentent des matrices dites de réponse angulaire associées à un pixel.

La figure 2 représente les principales étapes d'un procédé d'analyse selon un mode de réalisation de l'invention.

La figure 3A représente un dispositif permettant l'obtention d'une fonction de dispersion. La figure 3B illustre les principales étapes d'un procédé permettant l'obtention d'une telle fonction.

Les figures 3C et 3D montrent un exemple de spectre présentant un pic de diffraction caractéristique, dit pic de calibration, respectivement avant et après une normalisation par un spectre en transmission. Ces spectres permettent de déterminer l'intensité dudit pic pour constituer la fonction de dispersion. La figure 3E représente une matrice de dispersion, dont chaque ligne représente une fonction de dispersion.

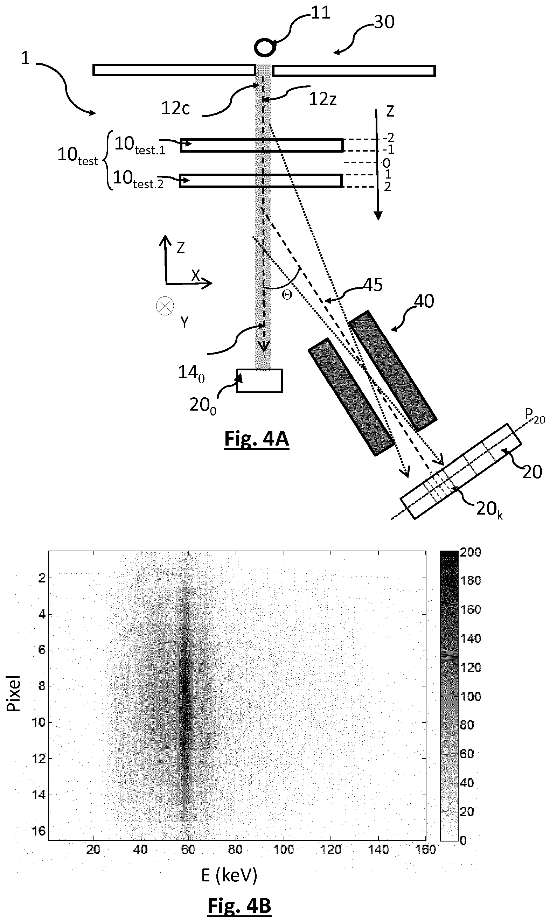

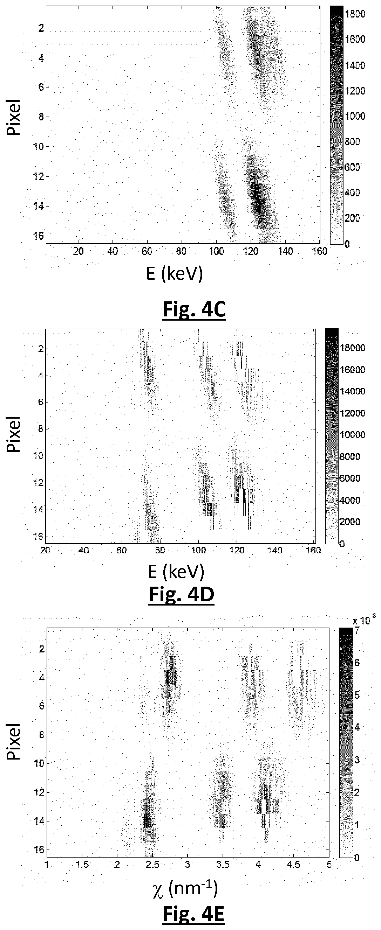

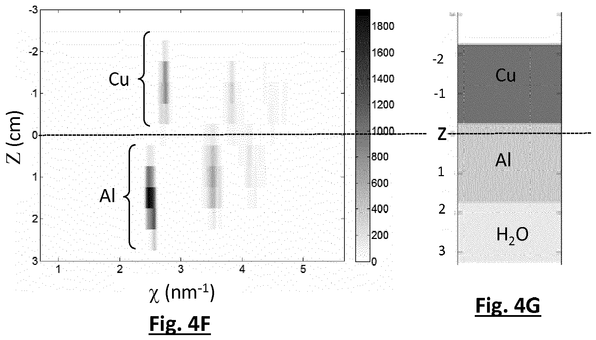

La figure 4A représente un dispositif expérimental mettant en oeuvre un objet test. La figure 4B montre différents spectres de diffusion, acquis par différents pixels virtuels, obtenus en mettant en oeuvre un objet de référence, en l'occurrence du plexiglas. La figure 4C montre différents spectres de diffusion, acquis par différents pixels virtuels, lors d'un essai expérimental mettant en oeuvre l'objet test. Les figures 4D et 4E représentent des fonctions de diffusion mesurées par différents pixels, exprimées respectivement en fonction de l'énergie ou en fonction du transfert en quantité de mouvement. La figure 4F représente les signatures de diffusion de différents volumes élémentaires, obtenues à partir des fonctions illustrées sur la figure 4E. La figure 4G illustre les différents matériaux identifiés dans l'objet test.



# EP 3 185 003 B1

## EXPOSE DE MODES DE REALISATION PARTICULIERS

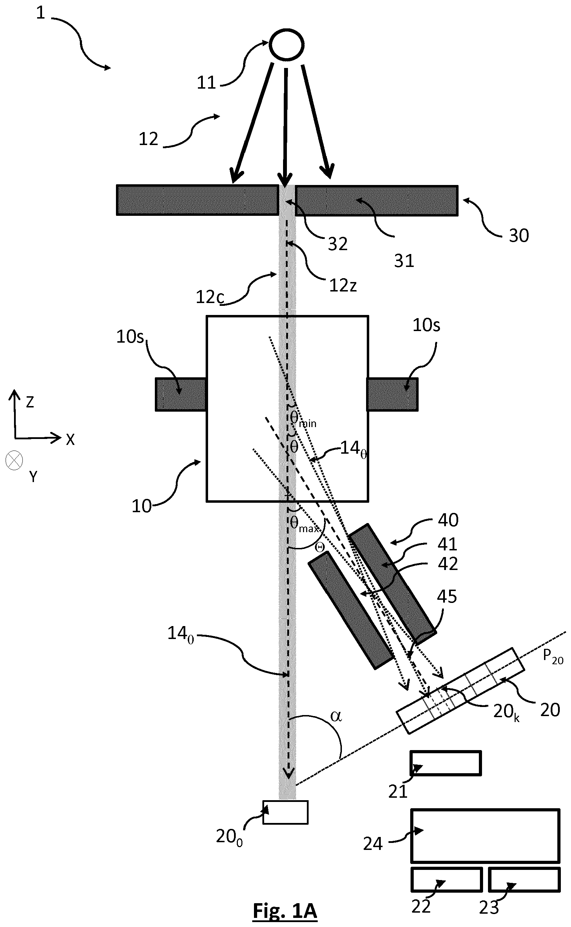

La figure 1A représente un exemple de dispositif d'analyse 1 d'un objet 10. Une source d'irradiation 11 émet un rayonnement électromagnétique ionisant 12 se propageant vers l'objet 10, dont on souhaite déterminer la composition. L'objet 10 est maintenu sur un support 10s.

Le dispositif comprend un premier collimateur 30, ou pré-collimateur, apte à collimater le rayonnement émis par la source d'irradiation 11 pour former un faisceau incident collimaté $12_c$ se propageant selon un axe de propagation $12_z$ vers l'objet. Le dispositif comporte également un détecteur 20, comportant des pixels $20_k$, chaque pixel étant apte à détecter un rayonnement $14_\theta$ diffusé par l'objet 10, selon une direction formant un angle de diffusion $\theta$ par rapport à l'axe de propagation $12_z$. Ce rayonnement est par exemple issu d'une diffusion élastique d'un rayonnement formant le faisceau incident collimaté $12_c$.

Le dispositif d'analyse 1 comporte un deuxième collimateur 40, interposé entre l'objet 10 et le détecteur 20. Ce deuxième collimateur 40 permet de diriger sélectivement un rayonnement de diffusion $14_\theta$, diffusé par l'objet 10, selon un angle de diffusion $\theta$ par rapport à l'axe de propagation $12_z$, compris dans une plage angulaire $\Delta\theta$. Par diriger sélectivement, on entend qu'un rayonnement diffusé selon un angle non compris dans cette plage angulaire $\Delta\theta$ est atténué par le deuxième collimateur.

Le dispositif d'analyse 1 est placé dans un référentiel auquel est rattaché un repère orthogonal X, Y, Z tel que représenté sur la figure 1A.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou y. De préférence, la source de rayonnement ionisant est poly-énergétique, le rayonnement incident étant émis selon une plage d'énergie s'étendant généralement selon plusieurs dizaines voire centaines de keV. Il s'agit notamment d'un tube émetteur de rayons X.

La source d'irradiation 11 est un tube à rayons X doté d'une anode de tungstène, soumise à une tension, généralement comprise entre 40 et 170 kV que l'on peut varier afin de modifier la plage d'énergie du rayonnement incident 12. Le détecteur 20 comporte des pixels $20_k$ répartis selon une ligne ou selon une matrice bidimensionnelle chaque pixel s'étendant selon une surface de 2.5 * 2.5 mm$^2$, son épaisseur étant de 5 mm. Le matériau constituant chaque pixel est un semi-conducteur, par exemple du CdTe ou du CdZnTe ou tout autre matériau apte à réaliser des mesures spectrométriques, de préférence à température ambiante. Il pourrait également s'agir d'un matériau de type scintillateur, sous réserve d'une résolution en énergie suffisante. Le détecteur est résolu en énergie, et chaque pixel permet d'obtenir des spectres selon des canaux d'énergie de l'ordre de 1 keV. La source d'irradiation 11 peut comporter un écran métallique, par exemple du Cuivre, de façon à bloquer la propagation, vers le pré-collimateur 30, d'un rayonnement dont l'énergie est inférieure à 20 keV. Lorsque cet écran est du cuivre, son épaisseur est par exemple égale à 0.2 mm.

Le premier collimateur 30, ou pré-collimateur, comporte un bloc de matériau dense 31, comportant par exemple du tungstène, apte à absorber la quasi-totalité du rayonnement 12 émis par la source d'irradiation 11. Il comporte une fine ouverture 32, s'étendant selon un axe, dit axe de propagation $12_z$, permettant le passage d'un fin faisceau collimaté $12_c$. Par fine ouverture, on entend une ouverture dont le diamètre ou la plus grande diagonale est inférieure à 2 cm, voire à 1 cm. Dans cet exemple, l'ouverture est un cylindre de diamètre 1 mm.

L'objet 10 peut être une pièce industrielle dont on souhaite déterminer la qualité ou la composition. Il peut également s'agir d'un bagage que l'on souhaite contrôler. Le dispositif 1 est alors utilisé à des fins de contrôle non destructif. Il peut également s'agir d'un tissu biologique vivant, par exemple une partie du corps d'un animal ou d'un être humain. Le dispositif est alors un dispositif d'analyse médicale, à des fins d'aide au diagnostic. La partie du corps peut en particulier être un organe dans lequel suite à un premier examen, par exemple une radiographie ou un scanner, on suspecte la présence d'une anomalie, en particulier une tumeur cancéreuse.

Le deuxième collimateur 40 comporte des parois 41, réalisées selon un matériau dense, aptes à absorber la quasi-totalité d'un rayonnement $14_\theta$ diffusé par l'objet en dehors de la plage angulaire précédemment évoquée. Une ouverture, pratiquée dans ledit matériau dense, définit un canal 42, s'étendant selon un axe médian 45. Par axe médian, on entend un axe s'étendant, le long du canal, à égale distance des parois délimitant le canal. Cet axe médian 45 est incliné par rapport à l'axe de propagation $12_z$ du faisceau incident collimaté $12_c$. L'angle $\Theta$ entre l'axe médian 45 du canal 42 et l'axe de propagation $12_z$, dit angle de collimation, est strictement supérieur à 0° et inférieur à 20°. Le collimateur est alors apte à transmettre, vers le détecteur 20, un rayonnement diffusé $14_\theta$ se propageant selon un angle, dit angle de diffusion $\theta$, dans une plage angulaire $\Delta\theta$ définie autour de l'angle de collimation $\Theta$. On a représenté, sur la figure 1A, deux rayonnements de diffusés $14_\theta$ délimitant le champ d'observation $\Delta\theta$ du deuxième collimateur 40, leurs angles de diffusion respectifs, constituant les bornes $\theta_{min}$ et $\theta_{max}$ de la plage angulaire associée au deuxième collimateur 40. La longueur de chaque canal est typiquement comprise entre 50 et 100 mm, tandis que l'ouverture est de quelques centaines de microns, par exemple 500 $\mu$m, selon une direction perpendiculaire à l'axe médian.

Dans le mode de réalisation représenté sur la figure 1A, le deuxième collimateur 40 ne comporte qu'un seul canal 42. Selon d'autres modes de réalisation le collimateur 40 peut comporter une pluralité de canaux $42_n$, par exemple disposés les uns parallèlement aux autres, à chaque canal étant associé un angle de collimation $\Theta_n$ et une plage angulaire $\Delta\theta_n$.

Le détecteur de rayonnement est un détecteur comprenant des pixels $20_k$ agencés selon un plan, dit plan de détection $P_{20}$. L'indice $k$ désigne une coordonnée de chaque pixel dans le plan de détection $P_{20}$. Les pixels peuvent s'étendre selon une ligne mais en général, ils s'étendent selon une matrice régulière bidimensionnelle. Dans l'exemple décrit dans cette demande, le plan de détection $P_{20}$ s'étend selon une direction formant un angle $\alpha$ strictement inférieur à 90° par rapport à l'axe de propagation $12_z$ du rayonnement incident collimaté $12_c$. Cet angle $\alpha$ est de préférence compris entre 70° et 88° ou 89°. De préférence, le plan de détection $P_{20}$ est orthogonal à l'axe médian 45 du canal 42 du deuxième collimateur 40.

Chaque pixel $20_k$ constituant le détecteur de rayonnement 20, comporte :

- un matériau détecteur, apte à interagir avec les photons d'un rayonnement diffusé $14_\theta$, transmis par l'objet 10, à travers le deuxième collimateur 40, ce matériau étant de type scintillateur ou, de préférence, un matériau semi-conducteur compatible avec une utilisation à la température ambiante, de type CdTe ou CdZnTe ;
- un circuit électronique 21, apte à générer un signal dont l'amplitude A dépend, et est de préférence proportionnelle, à une énergie E déposée par chaque photon interagissant dans le matériau détecteur ;
- un circuit de spectrométrie, apte à établir un spectre en énergie, noté $S_k^E$ des signaux détectés pendant une période temporelle, dite période d'acquisition.

Ainsi, chaque pixel $20_k$ est apte à produire un spectre $S_k^E$ du rayonnement 14e diffusé par l'objet durant une période temporelle durant laquelle l'objet est irradié par la source d'irradiation.

Le terme spectre en énergie désigne un histogramme de l'amplitude A des signaux détectés au cours d'une période d'acquisition du spectre. Une relation entre l'amplitude A d'un signal et l'énergie E d'un rayonnement peut être obtenue par une fonction d'étalonnage en énergie g telle que E = g(A), selon des principes connus de l'homme du métier. Un spectre d'énergie $S_k^E$ peut donc prendre la forme d'un vecteur, dont chaque terme $S_k^E(E)$ représente une quantité de rayonnement détecté par le pixel $20_k$ dans une plage d'énergie $E \pm \frac{\partial E}{2}$, avec $\partial E$ étant la largeur spectrale d'un pas de discrétisation en énergie, ou canal, du spectre.

Le dispositif comprend également une unité de calcul, ou processeur 22, par exemple un microprocesseur, apte à traiter chaque spectre $S_k^E$ acquis par les pixels $20_k$ du détecteur 20. En particulier, le processeur est un microprocesseur relié à une mémoire programmable 23 dans laquelle est stockée une séquence d'instructions pour effectuer les opérations de traitement de spectres et de calculs décrites dans cette description. Ces instructions peuvent être sauvegardées sur un support d'enregistrement, lisible par le processeur, de type disque dur, CDROM ou autre type de mémoire. Le processeur peut être relié à une unité d'affichage 24, par exemple un écran.

Chaque pixel $20_k$ est relié à un circuit électronique 21 permettant la collection de signaux représentatifs de l'énergie d'un rayonnement de diffusion transmis par le collimateur 40. Le circuit électronique 21 peut être relié au processeur 22, précédemment décrit, permettant un premier traitement consistant à analyser les signaux émis par plusieurs pixels adjacents, de façon à localiser le point d'impact d'un rayonnement détecté selon une résolution spatiale inférieure au pas selon lesquels sont distribués ces pixels. Un tel traitement, connu de l'homme du métier par le terme sub-pixelisation ou sur-pixelisation, revient à former des pixels dits virtuels $20'_k$, la surface de chaque pixel virtuel pouvant être par exemple de 0.5 mm * 0.5 mm, voire de 0.1 mm par 0.1 mm. Dans cet exemple, la largeur de chaque pixel virtuel est de 150 $\mu$m * 150 $\mu$m. On augmente ainsi la résolution spatiale du détecteur 20. Une telle décomposition de pixels virtuels est connue de l'homme du métier. Elle a déjà été décrite dans la publication Warburton W.K, « An approach to sub-pixel spatial resolution in room temperature X-ray detector arrays with good energy resolution » ainsi que dans Montemont et al. « Studying spatial resolution of CZT detectors using sub-pixel positioning for SPECT », IEEE transactions on nuclear science, Vol. 61, N°5, octobre 2014.

Dans la suite du texte, lorsqu'on se réfère à des pixels $20_k$, il peut indifféremment s'agir de pixels physiques ou virtuels. De préférence, il s'agit de pixels virtuels du fait de la meilleure résolution spatiale du détecteur obtenue par ce biais.

Le dispositif 1 comporte, de préférence, un détecteur, dit détecteur auxiliaire $20_0$, placé dans une configuration dite de transmission, apte à détecter non pas un rayonnement diffusé par l'objet maintenu sur le support, mais un

rayonnement $14_0$ transmis par l'objet 10 selon l'axe de propagation $12_z$. Un tel rayonnement, dit rayonnement de transmission, est transmis par l'objet 10 sans avoir interagi avec ce dernier. Le détecteur auxiliaire$20_0$ permet d'établir un spectre $S_0^E$ du rayonnement $14_0$ transmis par l'objet 10, selon la direction de propagation $12_z$ du faisceau incident collimaté $12_c$. Un tel spectre peut être utilisé pour déterminer une fonction spectrale d'atténuation *Att* de l'objet, comme décrit ultérieurement.

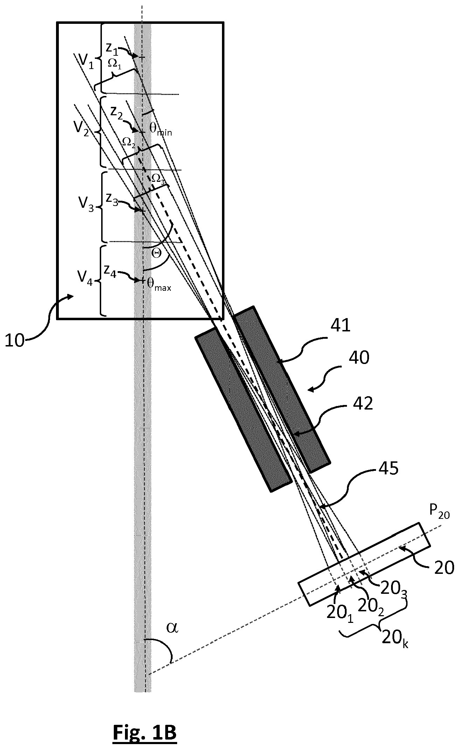

La figure 1B représente plus précisément l'objet 10 et le champ d'observation conféré par le deuxième collimateur 40. Sur cette figure, on distingue trois pixels $20_1$....$20_3$ aptes à recevoir un rayonnement de diffusion $14_\theta$, à chaque pixel étant associé un champ d'observation $\Omega_1$, $\Omega_2$, $\Omega_3$. Le champ d'observation de chaque pixel est défini par la taille dudit pixel et par la géométrie du collimateur 40. L'objet peut par ailleurs être échantillonné selon une pluralité de volumes élémentaires $V_1$...$V_{NZ}$, de façon régulière ou non, à chaque volume élémentaire $V_z$ étant associé une coordonnée z selon l'axe de propagation $12_z$. $N_Z$ désigne le nombre de volumes élémentaires $V_z$ considérés. Sur la figure 1B, on a représenté quatre volumes élémentaires $V_1$, $V_2$, $V_3$ et $V_4$, respectivement centrés selon des coodonnées $z_1$, $z_2$, $z_3$ et $z_4$ selon l'axe de propagation. L'idée de base de l'invention est d'estimer la nature du matériau composant l'objet 10 dans chacun de ces volumes élémentaires, en mettant en oeuvre un algorithme de reconstruction tel que décrit ci-après. Du fait de l'ouverture du collimateur 40, un même volume élémentaire $V_z$ peut émettre des rayonnements diffusés vers différents pixels $20_k$ du détecteur, en particulier lorsque le détecteur est subdivisé en pixels virtuels dont la taille est faible. Le spectre de diffusion mesuré par chaque pixel résulte de la détection de rayonnements diffusés, selon différents angles de diffusion, par différents volumes élémentaires de l'objet. L'échantillonnage en volume élémentaires indépendants du champ d'observation de chaque pixel permet d'effectuer une reconstruction de l'objet selon un échantillonnage fin, déterminé de façon arbitraire.

Lors de l'analyse, l'objet 10 est irradié par le faisceau incident poly-énergétique $12_c$. Sous l'effet de la diffusion élastique Rayleigh, une partie du rayonnement incident $12_c$ est diffusée dans plusieurs directions, l'intensité d'un rayonnement de diffusion pouvant être plus ou moins élevée selon le couple formé par l'énergie des photons et la direction de diffusion. Cette variation d'intensité en fonction de l'angle de diffusion $\theta$ forme la signature de diffusion, propre à chaque matériau. Dans le cas d'un cristal, l'intensité de diffusion n'est non-nulle que dans des configurations de couple énergie du photon incident /angle de diffusion précises, définies par l'équation de Bragg :

$$2d sin\left(\frac{\theta}{2}\right) = n\,\frac{hc}{E} \quad (1)$$

avec :

- *d* est une distance caractéristique de l'arrangement atomique ou moléculaire d'un matériau composant l'objet irradié. Lorsque le matériau analysé est un cristal, *d* correspond à la distance inter-réticulaire ;
- *n* est un entier désignant l'ordre de l'interférence ;
- *E* désigne l'énergie du rayonnement diffusé, exprimée en keV ;
- $\theta$ désigne l'angle de diffusion ;
- *h* et *c* désignent respectivement la constante de Planck et la vitesse de la lumière.

Il est courant d'exprimer une grandeur, désignée par le terme transfert de quantité de mouvement, et représentée par la lettre $\chi$, exprimée en nm$^{-1}$, telle que :

$$\chi = \frac{sin\left(\frac{\theta}{2}\right)E}{hc} \quad (2)$$

A chaque pixel ou pixel virtuel $20_k$, du détecteur 20 correspond un angle de diffusion $\theta_k$, représentant l'angle le plus probable selon lequel se propage un rayonnement de diffusion $14_\theta$ atteignant le pixel. L'intérêt de la sur-pixellisation est d'aboutir à des pixels de faible taille, ce qui réduit la plage angulaire des rayonnements de diffusion susceptibles d'atteindre l'un d'entre eux.

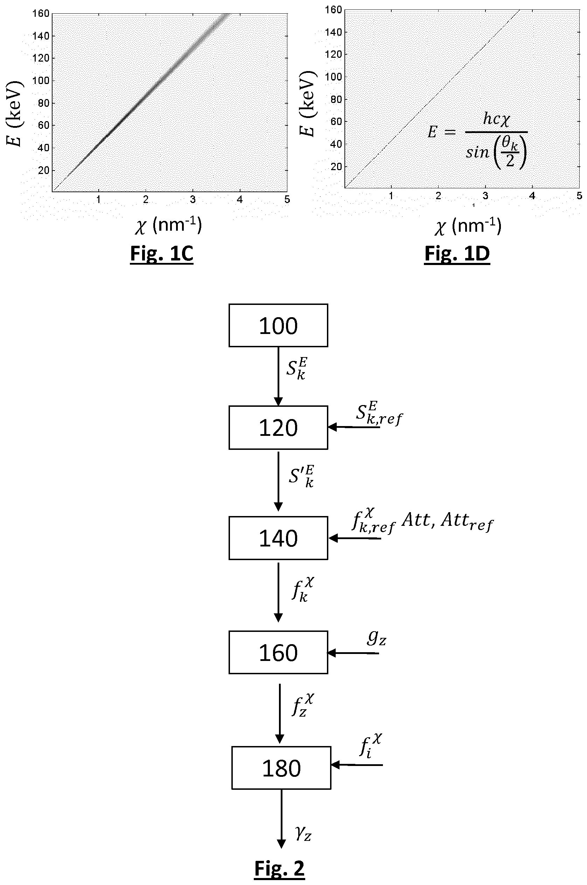

On va à présent décrire, en lien avec la figure 2, les principales étapes d'un procédé d'analyse de l'objet 10.

Au cours d'une première étape 100, l'objet 10 est irradié par la source d'irradiation 11 et chaque pixel $20_k$ du détecteur 20 acquiert un spectre $S_k^E$ du rayonnement de diffusion $14_\theta$ auquel il est exposé. Dans l'exemple, l'angle de collimation $\Theta$ peut être compris entre 1° et 20°. L'exposant *E* représente le fait que le spectre est ici une fonction de l'énergie. Connaissant l'angle de diffusion $\theta_k$ associé à chaque pixel $20_k$, il est possible d'exprimer un spectre de diffusion non pas en fonction de l'énergie mais en fonction du transfert de quantité de mouvement $\chi$, en procédant à un changement de variable selon l'équation (2), auquel cas le spectre est noté $S_k^{\chi}$.

Le spectre en énergie peut être exprimé selon l'équation suivante :

$$S_k^E = D_k.\left(S_{inc} \times Att \times \left(A_k.f_k^{\chi}\right)\right) \text{ (3)}$$

où :

- $S_k^E$ est le spectre en énergie mesuré par le pixel $20_k$, de dimension ($N_E$,1) ; $N_E$ désigne le nombre de canaux du spectre, c'est-à-dire le nombre de pas de discrétisation en l'énergie.
- $D_k$ est une matrice de réponse du pixel $20_k$, représentant les imperfections de la détection. Chaque terme $D_k(E,E_i)$ de cette matrice représente une probabilité qu'un photon incident au détecteur, d'énergie $E_i$, soit considéré par le détecteur comme ayant une énergie E. Cette matrice est ici une matrice carrée de taille $N_E*N_E$;
- $S_{inc}$ est un spectre en énergie du faisceau incident collimaté $12_c$, de dimension ($N_E$,1) ;
- $Att$ est un vecteur, dit fonction spectrale d'atténuation, représentant une atténuation du spectre incident par objet 10, de dimension ($N_E$,1) ;
- $A_k$ est une matrice représentant une fonction de réponse angulaire de chaque pixel $20_k$, de taille ($N_E,N_{\chi}$), ou $N_{\chi}$ représente le nombre de pas de discrétisation du transfert de quantité de mouvement $\chi$. Chaque terme $A_k(E,\chi)$ représente une probabilité que l'énergie d'un photon détecté d'énergie E par un pixel $20_k$ corresponde à un transfert de quantité de mouvement égal à $\chi$, sachant l'équation (2). L'application de cette matrice permet d'effectuer un changement de variable entre un spectre, mesuré par ledit pixel et exprimé en fonction de l'énergie E, et ce même spectre exprimé en fonction du transfert de quantité de mouvement $\chi$. La figure 1C est une illustration de cette matrice, dont les termes maxima sont situés selon une ligne définie par l'équation $E = \frac{hc\chi}{sin\left(\frac{\theta_k}{2}\right)}$, (4) où $\theta_k$ représente l'angle de diffusion moyen associé au pixel $20_k$ considéré. Une telle matrice est définie pour chaque pixel $20_k$.
- $f_k^{\chi}$ est une fonction de diffusion associée à chaque pixel $20_k$. Il s'agit d'un spectre des valeurs du transfert de quantité de mouvement $\chi$ mesurées par ledit pixel $20_k$. Cette fonction de diffusion ne dépend que des matériaux présents dans les volumes élémentaires $V_z$ s'étendant dans le champ d'observation $\Omega_k$ dudit pixel $20_k$. La dimension de $f_k^{\chi}$ est ($N_{\chi}$, 1);
- x désigne le produit de Hadamard (produit terme à terme) et . désigne le produit matriciel.

Le recours à des pixels de faible taille, qu'il s'agisse de pixels physiques ou virtuels, permet de limiter le champ d'observation de chaque pixel. De ce fait, dans cet exemple, la matrice de réponse angulaire $A_k$ peut être considérée comme étant une matrice diagonale représentant une fonction bijective exprimant un changement de variable, avec $A_k(E,\chi) = 1$ lorsque $E = \frac{hc\chi}{sin\left(\frac{\theta_k}{2}\right)}$ cette matrice diagonale étant représentée sur la figure 1D.

Par ailleurs, dans cet exemple, on considère que la résolution en énergie du détecteur est suffisamment bonne, pour que la matrice de réponse $D_k$ de chaque pixel $20_k$ soit considérée comme étant la matrice identité.

L'équation (3) devient :

$$S_k^E = S_{inc} \times Att \times f_k^E \text{ (5)}$$

où $f_k^E$ désigne la fonction de diffusion mesurée par un chaque pixel $20_k$ en fonction de l'énergie. A partir de cette fonction de diffusion, exprimée en fonction de l'énergie E, on peut établir une fonction de diffusion $f_k^{\chi}$, estimée en fonction du transfert de quantité de mouvement $\chi$, le passage entre les vecteurs $f_k^E$ et $f_k^{\chi}$ étant établi par l'application

EP 3 185 003 B1

de la matrice $A_k$ précédemment évoquée, avec $$f_k^E = A_k . f_k^\chi$$

Dans les étapes 120 et 140, on considère un spectre de diffusion de référence $S_{k,ref}^E$ obtenu, pour chaque pixel $20_k$, en disposant un objet de référence $10_{ref}$, réalisé à l'aide d'un matériau connu, à la place de l'objet 10. Les propriétés de diffusion de l'objet de référence sont connues.

On peut alors établir une fonction de diffusion de référence $f_{k,ref}^E$, $f_{k,ref}^\chi$ associée à chaque pixel $20_k$. L'obtention de cette fonction de diffusion de référence sera détaillée par la suite. En considérant que le spectre $S_{inc}$ du faisceau incident collimaté $12_c$ n'évolue pas entre la mesure du spectre de diffusion de l'objet de référence $S_{k,ref}^E$ et la mesure du spectre de diffusion $S_k^E$ de l'objet analysé, le spectre du rayonnement diffusé par chaque pixel $20_k$ peut être exprimé comme suit :

$$S_{k,ref}^E = S_{inc} \times Att_{ref} \times f_{k,ref}^E \ (6),$$

où $Att_{ref}$ désigne une fonction spectrale d'atténuation de l'objet de référence $10_{ref}$.

Il est alors possible de former un spectre de diffusion, noté $S'_k^E$, normalisé par ledit spectre de diffusion de référence $S_{k,ref}^E$, et tel que :

$$S'_k^E = \frac{S_k^E}{S_{k,ref}^E} = \frac{Att \times f_k^E}{Att_{ref} \times f_{k,ref}^E} \ (7)$$

Cette normalisation constitue l'étape 120. Cette normalisation permet de limiter l'influence du spectre incident, ainsi que celle d'une réponse angulaire du dispositif ou de sa réponse en énergie. A partir de ce spectre normalisé, il est possible de déterminer une fonction de diffusion $f_k^\chi$ de chaque pixel $20_k$, ce qui constitue l'étape 140, selon l'expression :

Ainsi,

$$f_k^\chi = f_{k,ref}^\chi \times A_k^{-1} . \left[ \frac{S'_k^E \times Att_{ref}}{Att} \right] (8)$$

où $f_{k,ref}^\chi$ désigne la fonction de diffusion de référence associée au pixel, exprimée en fonction du transfert de quantité de mouvement. Ainsi, connaissant $Att_{ref}$, $f_{k,ref}^\chi$ et $Att$, et ayant mesuré $S_k^E$, il est possible d'estimer $f_k^\chi$ par l'expression (8).

Au cours d'une étape 160 on cherche à obtenir une signature de diffusion représentative de chaque volume élémentaire de l'objet à partir des fonctions de diffusion $f_k^\chi$ respectivement obtenues par chaque pixel $20_k$. En effet, compte tenu de l'ouverture angulaire du collimateur 40, différents rayonnements diffusés, respectivement issus de différents volumes élémentaires peuvent être détectés par un même pixel $20_k$.

Cette dispersion spatiale est caractérisée par une fonction de dispersion, dite fonction de dispersion spatiale d'intensité, et notée $g_k$, représentant l'intensité d'un rayonnement diffusé par un volume élémentaire $V_z$, centré autour d'une coordonnée z, et atteignant un pixel $20_k$.

Cette fonction de dispersion $g_k$ est établie pour chaque pixel $20_k$. L'établissement de cette fonction de dispersion $g_k$ sera décrit par la suite.

On peut constituer une matrice de dispersion G, dont chaque ligne est formée par les différentes valeurs de la fonction de dispersion $g_k$, associée à un pixel $20_k$, en fonction de z. Chaque terme $G(k,z)$ de la matrice G représente l'intensité d'un rayonnement de diffusion détecté par un pixel $20_k$ et provenant d'un volume élémentaire $V_z$ centré en z. Autrement dit, $G(k,z) = g_k(z)$.

L'étape 160 revient à prendre en compte cette dispersion en constituant une matrice $F_k$, dont chaque ligne représente une fonction de diffusion $f_k^\chi$ obtenue par un pixel $20_k$. Chaque terme $F_k(k,\chi)$ de cette matrice représente une valeur de la fonction de diffusion $f_k^\chi$ mesurée, à la valeur $\chi$, par un pixel $20_k$. La dimension de cette matrice est $(N_k, N_\chi)$, où $N_k$ désigne le nombre de pixels.

On cherche à constituer une matrice $F_z$ de signatures de diffusion de l'objet 10, dont chaque ligne représente une signature de diffusion $f_z^\chi$ relative à un volume élémentaire $V_z$ centré en z. Chaque terme $F_z(z,\chi)$ de cette matrice représente une valeur de la signature de diffusion (ou facteur de forme) à la valeur $\chi$, d'un volume élémentaire $V_z$. La dimension de cette matrice est $(N_z, N_\chi)$, où $N_z$ désigne le nombre de volumes élémentaires $V_z$ considérés.

La matrice de dispersion $G$ établit un lien entre les fonctions de diffusion $f_k^\chi$ de chaque pixel, formant la matrice $F_k$, et les signatures de diffusion de chaque volume élémentaire $f_z^\chi$, formant la matrice $F_Z$, de telle sorte que : $F_k = G. F_Z$ (9).

Il s'agit alors, à partir de mesures collectées au niveau de chaque pixel, d'obtenir une information caractérisant un rayonnement diffusé par chaque volume élémentaire.

Ayant déterminé la matrice de dispersion $G$, et ayant formé, à partir des mesures, la matrice des fonctions de diffusion $F_k$, on peut obtenir une estimation de la matrice des signatures de diffusion $F_Z$ à l'aide d'un algorithme d'inversion. Parmi les algorithmes d'inversion itératifs couramment utilisé, on peut utiliser un algorithme de type MLEM, acronyme anglais signifiant « Maximum Likelihood Expectation Maximization ». Selon un tel algorithme, la valeur de chaque terme de la matrice $F_Z$ peut être estimée selon l'expression suivante :

$$\hat{F}_z^n(z,\chi) = \hat{F}_z^{n-1}(z,\chi) \frac{1}{\sum_k G(k,z)} \sum_k \frac{F_k(k,\chi).G(k,z)}{\sum_Z G(k,z)\cdot\hat{F}_z^{n-1}(z,\chi)} \ (10)$$

l'exposant *n* désignant le rang de chaque itération. Chaque itération permet alors d'obtenir une estimation $\hat{F}_z^n$ de la matrice $F_Z$.

Les itérations se poursuivent jusqu'à l'atteinte d'un critère de convergence, ce dernier pouvant être un nombre prédéterminé d'itérations, ou une faible variation entre les valeurs estimées au cours de deux itérations successives. La mise en oeuvre de cet algorithme suppose une étape d'initialisation de la matrice $F_z$. Par exemple, cette initialisation est telle que :

$$F_z^{n=0} = \begin{bmatrix} 1 & \cdots & 1 \\ \vdots & \ddots & \vdots \\ 1 & \cdots & 1 \end{bmatrix} (11)$$

A l'issue de l'étape 160, on dispose d'une estimation de la matrice $F_z$, dont chaque ligne représente une signature de diffusion $f_z^\chi$ d'un matériau constituant un volume élémentaire $V_z$ de l'objet 10.

Au cours d'une étape 180, on identifie le matériau constituant chaque volume élémentaire $V_z$ à partir de la signature de diffusion $f_z^\chi$ qui lui est associée. Pour cela on dispose de signatures de diffusion étalons de $f_i^\chi$ de différents matériaux étalons connus 10*i*. Ces signatures de diffusion étalons sont soit établies expérimentalement, soit obtenues dans la littérature. On peut déterminer les proportions $\gamma_z(i)$ du matériau 10*i* dans le volume élémentaire $V_z$ par l'expression :

$$(\gamma_z(i = 1) \ldots \gamma_z(i = N_i)) = Argmin \left(\left\| f_z^\chi - \sum_i \gamma_z(i) \ f_i^\chi \right\|^2\right) (12)$$

où $N_i$ désigne le nombre de matériaux étalons $10_i$ connus.

On obtient un vecteur $\gamma_z$ dont chaque terme $\gamma_z(i)$ représente une proportion du matériau $10_i$ dans le volume élémentaire $V_z$.

Obtention des fonctions de dispersions et de la matrice de dispersion $G$

Le passage entre les fonctions de diffusion $f_k^\chi$ mesurées par un pixel et les signatures de diffusion $f_z^\chi$ du rayonnement émis par un volume élémentaire $V_z$ nécessite l'utilisation de fonctions de dispersion $g_k$, précédemment évoquées, associées à chaque pixel $20_k$, à partir desquelles on peut établir la matrice de dispersion G. Ces fonctions peuvent être obtenues par simulation à l'aide de codes de calcul. Il est également possible de les déterminer de façon expérimentale, en utilisant un objet de calibration $10_c$, constitué par un matériau connu se présentant sous la forme d'une plaque fine, apte à être déplacée successivement le long de l'axe de propagation $12_z$ du faisceau incident collimaté $12_c$. Par plaque fine, on entend une largeur de l'ordre de celle d'un volume élémentaire, c'est-à-dire de l'ordre de la résolution spatiale que l'on souhaite obtenir.

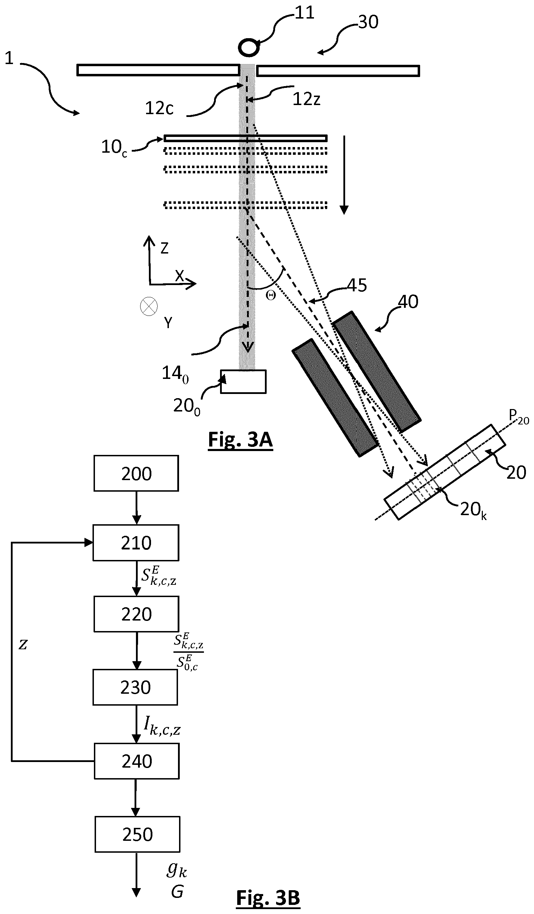

La figure 3A représente un dispositif permettant l'obtention des fonctions de dispersions $g_k$ de chaque pixel, en lien avec les principales étapes du procédé illustrées sur la figure 3B. L'objet de calibration $10_c$ est translaté selon l'axe $12_z$ de manière à occuper successivement les différents volumes élémentaires $V_z$ d'un objet analysé. A chaque position z de l'objet de calibration $10_c$, ce dernier est irradié par la source d'irradiation 11 et chaque pixel $20_k$ acquiert un spectre de calibration $S_{k,c,z}^E$ du rayonnement diffusé lorsque l'objet de calibration $10_c$ occupe une position z.

L'objet de calibration $10_c$ est choisi de manière à présenter une signature de diffusion présentant des pics caractéristiques. On peut par exemple choisir l'aluminium, d'épaisseur 3 mm, présentant une distance caractéristique à 2.0248 Å. Cela correspond à un transfert de quantité de mouvement $\chi = 2.469 nm^{-1}$. L'épaisseur de l'objet de calibration doit être cohérente avec la résolution spatiale recherchée. Elle peut par exemple être comprise entre 1mm et 1 cm si l'on souhaite obtenir une résolution spatiale inférieure à 1 cm. L'objet de calibration $10_c$ ne correspond pas forcément à l'objet de référence $10_{ref}$ préalablement évoqué.

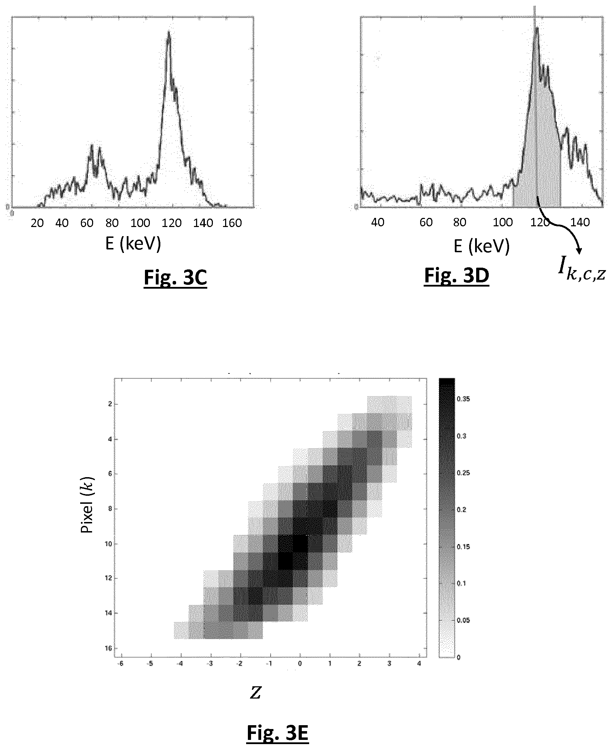

Considérons par exemple un pixel $20_k$ configuré pour recevoir essentiellement un rayonnement de diffusion émis sous un angle $\theta$ de 2.5°. La figure 3C représente un spectre $S_{k,c,z}^E$ du rayonnement diffusé acquis par ce pixel. Ce spectre peut être normalisé par un spectre de transmission $S_{0,c}^E$ mesuré par le détecteur auxiliaire $20_0$, placé en transmission, afin d'obtenir un spectre normalisé représenté sur la figure 3D. Le spectre de transmission $S_{0,c}^E$ correspond à un spectre d'un rayonnement ayant traversé l'objet de calibration $10_c$ parallèlement à l'axe de propagation $12_z$, sans avoir interagi avec l'objet de calibration $10_c$. On observe un pic, dit pic de calibration, centré à une énergie de 120 keV, ce qui est conforme à l'énergie $E$ obtenue par l'équation (2) en considérant $\chi = 2.469 nm^{-1}$ et $\theta = 2.5°$. Le pic de calibration s'étend en deçà et au-delà de 120 keV en raison de la résolution en énergie et angulaire du pixel $20_k$. Son intégrale $I_{k,c,z}$, représentée sur la figure 3D, peut être aisément obtenue par un algorithme de traitement de spectre, usuel dans le domaine de la spectrométrie. Elle représente une quantité de rayonnement détecté par le pixel $20_k$, dans le pic de calibration, lorsque l'objet de calibration est placé dans une position z. A chaque position z de l'objet de calibration $10_c$, on détermine ainsi l'intégrale $I_{k,c,z}$ du pic de calibration, sur la base du spectre de diffusion $S_{k,c,z}^E$, de préférence normalisé par le spectre en transmission $S_{0,c}^E$. La fonction de dispersion $g_k$ associée à chaque pixel $20_k$ comporte alors, pour l'ensemble des positions z, l'intégrale $I_{k,c,z}$ du pic de calibration. Autrement dit : $g_k(z) = I_{k,c,z}$ (13)

On dispose alors de valeurs d'intensité $I_{k,c,z}$ représentant une quantité de photons détectée par un pixel $20_k$, dans un pic représentatif de l'objet de calibration, lorsque ce dernier occupe une position z dans l'objet, c'est-à-dire occupe un volume élémentaire $V_z$ centré en z.

On peut alors établir la matrice de dispersion $G$, telle que représentée sur la figure 3E dont chaque terme $G(k,z) = g_k(z) = I_{f,c,z}$. Cette matrice représente l'intensité d'un rayonnement diffusé détecté par un pixel $20_k$ Provenant d'un volume élémentaire $V_z$ de l'objet centré en z. Elle est de dimension $(N_k, N_z)$. Chaque ligne $k$ de cette matrice représente une fonction de dispersion $g_k$ d'un pixel $20_k$ associé à ladite ligne. Les valeurs des intensités $I_{k,c,z}$ sont exprimées selon l'échelle des niveaux de gris.

Ainsi, la détermination de la matrice de dispersion comprend les étapes suivantes :

- disposition de l'objet de calibration $10_c$, constitué d'un matériau connu, selon une position z, dans le champ d'observation du deuxième collimateur (étape 200) ;

- à ladite position z, mesure du spectre de diffusion $S_{k,c,z}^E$ par les pixels $20_k$ du détecteur 20 (étape 210) ;

- normalisation de chaque spectre de diffusion par un spectre en transmission $S_{0,c}^E$ mesuré à travers l'objet de calibration par le détecteur auxiliaire $20_0$ (étape 220), cette normalisation étant optionnelle mais préférable ;

- dans chaque spectre de diffusion ainsi normalisé, détermination de l'intensité $I_{k,c,z}$ d'un pic de calibration représentatif du matériau constituant l'objet de calibration (étape 230);

- réitération des étapes 210 à 230 en déplaçant l'objet de calibration successivement à différentes positions z dans le champ d'observation du deuxième collimateur (étape 240) ;

- à l'aide des intensités, obtention de la fonction de dispersion $g_k$ associée à chaque pixel et de la matrice de dispersion $G$ (étape 250).

A certaines positions z de l'objet de calibration $10_c$, le spectre de calibration $S_{k,c,z}^E$ mesuré par un pixel $20_k$ peut ne pas comporter de pic de calibration identifiable. Dans ce cas, ce spectre de calibration n'est pas pris en compte pour déterminer la fonction de dispersion associée au pixel.

<u>Obtention de la fonction de diffusion $f_{k,ref}^\chi$ du matériau de référence, pour chaque pixel $20_k$</u>

L'étape 160 nécessite la connaissance de la fonction de diffusion $f_{k,ref}^\chi$ de chaque pixel $20_k$ lorsqu'il détecte un rayonnement de diffusion provenant du matériau de référence $10_{ref}$. En présence d'un tel matériau, occupant l'ensemble des volumes élémentaires $V_z$ dans le champ d'observation du deuxième collimateur 40, la signature de diffusion $f_{Z,ref}^\chi$ de chaque volume élémentaire $V_z$ correspond à une signature de diffusion $f_{ref}^\chi$ du matériau de référence, connue et commune à l'ensemble des volumes élémentaires. La fonction de diffusion $f_{k,ref}^\chi$ de chaque pixel est obtenue selon l'expression (9), en constituant une matrice $F_{Z,ref}$ dont chaque ligne correspond à la signature de diffusion $f_{ref}^\chi$ du matériau de référence $10_{ref}$. On obtient une matrice $F_{k,ref} = G.F_{Z,ref}$ (14), chaque ligne de la matrice $F_{k,ref}$ représentant la fonction de diffusion $f_{k,ref}^\chi$, associée à chaque pixel $20_k$, de l'objet de référence $10_{ref}$.

L'objet de référence $10_{ref}$ est de préférence constitué d'un matériau de référence dont la signature spectrale, ou facteur de forme, est relativement homogène dans une plage d'énergie étendue. Il peut par exemple s'agir d'eau ou de PMMA (Polyméthacrylate de méthyle), ou le plexiglas.

Lorsque l'objet de référence $10_{ref}$ est disposé à la place de l'objet à analyser, on acquiert les spectres de référence $S_{k,ref}^E$, ces derniers étant utilisés lors de l'étape 120, lors de la normalisation de chaque spectre mesuré.

<u>Obtention des fonctions spectrales d'atténuation</u>

Le procédé suppose, de préférence, l'utilisation des fonctions spectrales d'atténuation $Att$ et $Att_{ref}$, représentant respectivement l'atténuation du faisceau incident collimaté $12_c$ par l'objet 10 et par l'objet de référence $10_{ref}$. Ces fonctions sont respectivement obtenues en utilisant le détecteur auxiliaire $20_0$, placé en transmission, ce dernier mesurant :

- un spectre en énergie $S_{inc}$ du faisceau incident collimaté $12_c$, ce spectre étant obtenu sans objet disposé entre le détecteur $20_0$ et le premier collimateur 30.

- un spectre en énergie $S_0^E$ ou $S_{0,ref}^E$ du rayonnement transmis $14_0$, selon l'axe de propagation $12_z$, par l'objet 10 ou l'objet de référence $10_{ref}$. Ce rayonnement transmis n'a pas subi d'interaction avec l'objet (ou avec l'objet de référence).

Ayant acquis ces spectres, on peut définir une fonction spectrale d'atténuation par une comparaison, généralement sous la forme d'un ratio. Ainsi, l'atténuation *Att* de l'objet 10 est obtenue par un ratio entre $S_{inc}$ et $S_0^E$, et l'atténuation *Att*$_{ref}$ de l'objet de référence est obtenue par un ratio entre $S_{inc}$ et $S_{0,ref}^E$. Cela correspond aux équations suivantes :

$$Att \ = \frac{S_{inc}}{S_0^E} \ (15) \ ;$$

$$Att_{ref} = \frac{S_{inc}}{S_{0,ref}^E} \ (16)$$

Essai

Un essai, sur la base de simulations, a été réalisé en utilisant un objet test $10_{test}$ constitué d'une plaque de cuivre $10_{test-1}$ d'épaisseur 1 cm et d'une plaque d'aluminium $10_{test-2}$ d'épaisseur 1 cm, ces deux plaques étant espacées de 2 cm. L'angle de collimation $\Theta$ est ici égal à 5°. Le dispositif simulé est représenté sur la figure 4A.

Les mesures de références $f_{k,ref}^\chi$ et *Att*$_{ref}$, permettant l'obtention des fonctions de diffusion $f_k^\chi$ de chaque pixel (cf. étape 140), sont effectuées en utilisant un bloc de plexiglas d'épaisseur 10cm.

On a tout d'abord disposé le bloc de plexiglas, puis déterminé, à l'aide du détecteur auxiliaire $20_0$, un spectre de transmission $S_{0,ref}^E$. Ce détecteur auxiliaire permet également de mesurer un spectre $S_{inc}$ du faisceau incident collimaté $12_c$, sans aucun objet disposé entre le détecteur auxiliaire $20_0$ et le premier collimateur 30. On a ainsi déterminé une fonction spectrale *Att*$_{ref}$ d'atténuation du matériau de référence sur la base d'un ratio entre $S_{0,ref}^E$ et $S_{inc}$ selon l'équation (16).

On a également déterminé le spectre $S_{k,ref}^E$ du rayonnement de diffusion du matériau de référence, en l'occurrence le plexiglas pour différents pixels virtuels $20_k$. La figure 4B représente ces différents spectres. Sur cette figure, l'axe des abscisses représente l'énergie et l'axe des ordonnées représente la référence de chaque pixel virtuel, le code couleur représentant l'amplitude du spectre. Chaque ligne de cette figure représente le spectre acquis par chaque pixel, l'intensité étant indiquée par l'échelle des niveaux de gris.

On a ensuite déterminé la fonction spectrale d'atténuation *Att* de l'objet test $10_{test}$ en effectuant une mesure d'un spectre par le détecteur auxiliaire 20o avec et sans objet test, de façon à acquérir respectivement les spectres $S_0^E$ et $S_{inc}$, dont le ratio permet d'établir cette fonction spectrale d'atténuation *Att*, selon l'expression (15).

On a ensuite acquis les spectres de diffusion $S_k^E$ de l'objet test par différents pixels virtuels $20_k$, ces spectres étant représentés sur la figure 4C. Sur cette figure, l'axe des abscisses représente l'énergie et l'axe des ordonnées représente la référence de chaque pixel virtuel, l'intensité étant indiquée par l'échelle des niveaux de gris.

Pour chaque pixel, le spectre de diffusion de l'objet $S_k^E$ a ensuite été normalisé selon l'équation (7), en utilisant le spectre de diffusion de l'objet de référence $S_{k,ref}^E$ de façon à obtenir, pour chaque pixel $20_k$, un spectre normalisé $S'^E_k$.

A partir de chaque spectre normalisé $S'^E_k$, on a obtenu les fonctions de diffusion $f_k^\chi$ de chaque pixel $20_k$ exprimées en fonction du transfert de quantité de mouvement $\chi$ (cf. équation 8), en utilisant les fonctions de diffusion du matériau de référence $f_{k,ref}^\chi$ associées à chaque pixel. Les figures 4D et 4E représentent respectivement les fonctions de diffusion $f_k^E$ et $f_k^\chi$ exprimées respectivement en fonction de l'énergie et du transfert de quantité de mouvement. L'intensité est indiquée par l'échelle des niveaux de gris.

Connaissant la matrice de dispersion G, on a obtenu la signature de diffusion $f_z^{\chi}$ de différents volumes élémentaires répartis, dans l'objet, selon l'axe de propagation $12_z$ en appliquant les équations (9) et (10). Ces signatures de diffusion sont reportées sur la figure 4F, la coordonnée z = 0 désignant le centre de l'objet test. On retrouve bien des signatures spécifiques de l'aluminium (Al) et du cuivre (Cu). Cette matrice de dispersion a été établie expérimentalement, comme préalablement décrit.

La figure 4G illustre les différents matériaux finalement déterminés en fonction de la coordonnée z. Le cuivre et l'aluminium sont correctement identifiés. L'espace d'air entre les deux matériaux n'a pas été identifié, ce qui explique que l'espace entre l'aluminium et le cuivre est considéré comme occupé soit par de l'aluminium, soit par du cuivre. La présence d'eau à une extrémité de l'objet résulte d'un effet de bord.

L'invention pourra être mise en oeuvre dans les applications de type contrôle non destructif ou d'aide au diagnostic médical, en mettant en oeuvre un collimateur comportant un seul canal, comme décrit en lien avec la description détaillée, ou un collimateur comportant plusieurs canaux.

**Revendications**

1. Procédé d'analyse d'un objet (10) comprenant les étapes suivantes :

   a) disposition de l'objet (10) face à une source d'irradiation (11) émettant un rayonnement électromagnétique ionisant et irradiation de l'objet à l'aide de ladite source, à travers un premier collimateur (30), de façon à former un faisceau incident collimaté ($12_c$) se propageant vers l'objet (10) selon un axe de propagation ($12_z$) ;
   b) disposition d'un détecteur (20) comprenant une pluralité de pixels ($20_k$), de façon que chaque pixel soit apte à détecter un rayonnement diffusé ($14_\theta$) par l'objet ainsi irradié, ledit rayonnement diffusé ($14_\theta$) se propageant selon une direction formant un angle, dit angle de diffusion ($\theta$), aigu par rapport audit axe de propagation ($12_z$) ;
   c) acquisition, par plusieurs pixels ($20_k$) du détecteur, d'un spectre de diffusion $\left(S_k^E\right)$ représentatif d'une distribution en énergie dudit rayonnement diffusé ($14_\theta$), chaque spectre de diffusion étant associé à un pixel ($20_k$) ;
   d) décomposition de l'objet en volumes élémentaires ($V_z$) et association, à chaque pixel ($20_k$), d'une fonction de dispersion ($g_k$), dont la valeur, pour chaque volume élémentaire, représente une contribution dudit volume élémentaire au rayonnement diffusé ($14_\theta$) détecté par chaque pixel ($20_k$);
   e) à partir des spectres de diffusion acquis $\left(S_k^E\right)$ et des fonctions de dispersions ($g_k$) associées à chaque pixel ($20_k$), détermination d'une signature de diffusion $\left(f_z^{\chi}\right)$ associée à chaque volume élémentaire ($V_z$), représentative d'un matériau constituant ledit volume élémentaire ;
   f) à partir des signatures de diffusion $\left(f_z^{\chi}\right)$ associées à chaque volume élémentaire ($V_z$), estimation d'une nature du matériau constituant les différents volumes élémentaires ($V_z$) de l'objet.

2. Procédé selon la revendication 1, dans lequel l'étape e) comporte, sur la base du spectre de diffusion $\left(S_k^E\right)$ acquis par chaque pixel ($20_k$), une détermination d'une fonction de diffusion $\left(f_k^{\chi}\right)$ associée audit pixel, obtenue en combinant ledit spectre de diffusion $\left(S_k^E\right)$ avec un spectre de référence $\left(S_{k,ref}^E\right)$, le spectre de référence étant acquis par ledit pixel ($20_k$) en plaçant un matériau de référence ($10_{ref}$) à la place de l'objet (10).

3. Procédé selon la revendication 2, dans lequel la détermination de ladite fonction de diffusion $\left(f_k^{\chi}\right)$ associée à chaque pixel ($20_k$) comporte une prise en compte d'une fonction de diffusion dite de référence $\left(f_{k,ref}^{\chi}\right)$, établie, pour ledit pixel, relativement audit matériau de référence ($10_{ref}$).

4. Procédé selon la revendication 3, dans lequel la détermination de ladite fonction de diffusion $\left(f_k^{\chi}\right)$ associée à chaque pixel ($20_k$) comporte l'établissement d'un ratio, terme à terme, du spectre de diffusion $\left(S_k^E\right)$, acquis par ledit pixel, par ledit spectre de référence $\left(S_{k,ref}^E\right)$, le ratio étant multiplié, terme à terme, par ladite fonction de diffusion de référence $\left(f_{k,ref}^{\chi}\right)$ établie pour ledit pixel.

**5.** Procédé selon l'une quelconque des revendications 2 à 4, dans lequel l'étape e) comporte une prise en compte d'une fonction spectrale d'atténuation de l'objet (*Att*) ainsi qu'une fonction spectrale d'atténuation dudit objet de référence (*Att$_{ref}$*).

**6.** Procédé selon l'une quelconque des revendications 2 à 5, dans lequel l'étape e) comporte :

- l'établissement d'une matrice de réponse ($F_k$) à partir des fonctions de diffusion $\left(f_k^{\chi}\right)$ associées à chaque pixel ($20_k$) ;
- l'établissement d'une matrice de dispersion (G) à partir des fonctions de dispersion ($g_k$) associées à chaque pixel ($20_k$) ;
- l'estimation d'une matrice ($F_Z$) comportant les signatures de diffusion $\left(f_z^{\chi}\right)$ de chaque volume élémentaire ($V_z$), de telle sorte que le produit matriciel de ladite matrice de dispersion (G) par ladite matrice de signatures de diffusion de chaque volume élémentaire ($F_Z$) corresponde sensiblement à ladite matrice de réponse ($F_k$).

**7.** Procédé selon l'une quelconque des revendications précédentes, dans lequel ladite fonction de dispersion ($g_k$) associée à un pixel ($20_k$) est élaborée en plaçant un objet de calibration ($10_c$) successivement à différentes positions (z), le long dudit l'axe de propagation ($12_z$), et en effectuant, à chaque position, les étapes suivantes :

i) irradiation dudit matériau de calibration ($10_c$) et acquisition, par ledit pixel ($20_k$) d'un spectre, dit spectre de calibration $\left(S_{k,c,z}^{E}\right)$ du rayonnement diffusé par ledit objet de calibration, placé dans ladite position (z) ;
ii) sur chaque spectre de calibration $\left(S_{k,c,z}^{E}\right)$, identification d'un pic de calibration, caractéristique dudit objet de calibration ($10_c$) ;
iii) détermination de l'intensité ($I_{k,c,z}$) dudit pic de calibration ;

la fonction de dispersion ($g_k$) étant obtenue à partir de différentes intensités ($I_{k,c,z}$) des pics de calibration respectivement obtenus, pour ledit pixel ($20_k$), à chaque position (z) dudit objet de calibration ($10_c$).

**8.** Procédé selon l'une quelconque des revendications précédentes, dans lequel l'étape f) comporte, pour chaque volume élémentaire ($V_z$), une comparaison entre la signature de diffusion $\left(f_z^{\chi}\right)$ associée audit volume élémentaire, obtenue lors de l'étape e), avec des signatures de diffusion pré-établies $\left(f_i^{\chi}\right)$, correspondant chacune à un matériau connu ($10_i$).

**9.** Procédé selon l'une quelconque des revendications précédentes, dans lequel les pixels ($20_k$) sont des pixels virtuels, obtenus par une sur-pixelisation de pixels physiques du détecteur (20).

**10.** Support d'enregistrement d'informations, lisible par un processeur, comportant des instructions pour l'exécution d'un procédé selon l'une quelconque des revendications 1 à 9, ces instructions étant aptes à être exécutées par un processeur (22).

**11.** Dispositif d'analyse d'un objet (10) comportant :

- une source d'irradiation (11), apte à produire un rayonnement électromagnétique (12) ionisant se propageant vers un support ($10_s$) apte à recevoir ledit objet (10) ;
- un premier collimateur (30), disposé entre la source d'irradiation et le support ($10_s$), le premier collimateur présentant une ouverture (32) apte à former un faisceau collimaté ($12_c$) se propageant selon un axe de propagation ($12_z$), vers le support ($10_s$) ;
- un deuxième collimateur (40), disposé entre le support ($10_s$) et un détecteur (20), le deuxième collimateur présentant une ouverture (42) s'étendant entre ledit support ($10_s$) et ledit détecteur (20), selon un axe médian (45) incliné par rapport audit axe de propagation ($12_z$) ;

- le détecteur (20), comprenant des pixels (20$_k$), chaque pixel étant apte à détecter un rayonnement électro-magnétique diffusé (14$_\theta$) par l'objet (10) à travers ladite ouverture (42), et à en acquérir un spectre en énergie, dit spectre de diffusion $(S_k^E)$ ;

**caractérisé en ce que**

- le dispositif comporte un microprocesseur (22) configuré pour effectuer, à partir du spectre de diffusion $(S_k^E)$ acquis par chaque pixel (20$_k$), les étapes d) à f) du procédé selon l'une quelconque des revendications 1 à 9.

12. Dispositif d'analyse d'un objet selon la revendication 11, dans lequel l'axe médian (45) forme un angle (Θ), dit angle de collimation, par rapport à l'axe de propagation (12$_z$), cet angle étant strictement supérieur à 0° et inférieur à 20°.

13. Dispositif d'analyse d'un objet (10) selon l'une quelconque des revendications 11 ou 12, comportant également un détecteur auxiliaire (20$_0$) apte à acquérir un spectre d'un rayonnement transmis par l'objet, dit spectre de transmission, maintenu sur le support (10$_s$), selon l'axe de propagation (12$_z$).

**Patentansprüche**

1. Verfahren zur Analyse eines Objekts (10), umfassend die folgenden Schritte:

a) Anordnen des Objekts (10) gegenüber einer Strahlungsquelle (11), die eine ionisierende elektromagnetische Strahlung emittiert, und Bestrahlen des Objekts mit Hilfe der Quelle quer über einen ersten Kollimator (30), um einen kollimierten einfallenden Strahl (12$_c$) zu bilden, der sich zum Objekt (10) in einer Ausbreitungsachse (12$_z$) ausbreitet;
b) Anordnen eines Detektors (20), umfassend mehrere Pixel (20$_k$), so dass jedes Pixel geeignet ist, eine durch das so bestrahlte Objekt gestreute Strahlung (14$_\theta$) zu detektieren, wobei sich die gestreute Strahlung (14$_\theta$) in einer Richtung ausbreitet, die einen als Streuwinkel (θ) bezeichneten spitzen Winkel in Bezug auf die Ausbreitungsachse (12$_z$) bildet;
c) Erfassen, durch mehrere Pixel (20$_k$) des Detektors, eines Streuspektrums $(S_k^E)$, das für eine Energieverteilung der gestreuten Strahlung (14$_\theta$) repräsentativ ist, wobei jedes Streuspektrum mit einem Pixel (20$_k$) assoziiert wird;
d) Zerlegen des Objekts in Elementarvolumen (V$_z$), und Assoziieren, mit jedem Pixel (20$_k$), einer Dispersionsfunktion (g$_k$), deren Wert, für jedes Elementarvolumen, einen Beitrag des Elementarvolumens zur gestreuten Strahlung (14$_\theta$) repräsentiert, die von jedem Pixel (20$_k$) detektiert wird;
e) aus den erfassten Streuspektren $(S_k^E)$ und den Dispersionsfunktionen (g$_k$), die mit jedem Pixel (20$_k$) assoziiert sind, Bestimmen einer Streusignatur $(f_z^X)$, die mit jedem Elementarvolumen (V$_z$) assoziiert ist, repräsentativ für ein das Elementarvolumen bildendes Material;
f) aus den Streusignaturen $(f_z^X)$, die mit jedem Elementarvolumen (V$_z$) assoziiert sind, Schätzen einer Art des Materials, das die verschiedenen Elementarvolumen (V$_z$) des Objekts bildet.

2. Verfahren nach Anspruch 1, wobei Schritt e), auf der Basis der Streuspektren $(S_k^E)$, die von jedem Pixel (20$_k$) erfasst werden, ein Bestimmen einer Streufunktion $(f_k^X)$, die mit dem Pixel assoziiert ist, umfasst, das durch Kombinieren des Streuspektrums $(S_k^E)$ mit einem Referenzspektrum $(S_{k,ref}^E)$ erhalten wird, wobei das Referenzspektrum durch das Pixel (20$_k$) erfasst wird, indem ein Referenzmaterial (10$_{ref}$) an die Stelle des Objekts (10) gesetzt wird.

3. Verfahren nach Anspruch 2, wobei das Bestimmen der Streufunktion $(f_k^X)$, die mit jedem Pixel (20$_k$) assoziiert ist, ein Berücksichtigen einer als Referenz bezeichneten Streufunktion $(f_{k,ref}^X)$ umfasst, die für das Pixel relativ zum Referenzmaterial ($10_{ref}$) festgelegt wird.

4. Verfahren nach Anspruch 3, wobei das Bestimmen der Streufunktion $(f_k^X)$, die mit jedem Pixel ($20_k$) assoziiert ist, ein Festlegen eines Verhältnisses, Term für Term, des Streuspektrums $(S_k^E)$, das von dem Pixel erfasst wird, zum Referenzspektrum $(S_{k,ref}^E)$ umfasst, wobei das Verhältnis, Term für Term, mit der Streureferenzfunktion $(f_{k,ref}^X)$ multipliziert wird, die für das Pixel festgelegt wird.

5. Verfahren nach einem der Ansprüche 2 bis 4, wobei Schritt e) ein Berücksichtigen einer Dämpfungsspektralfunktion des Objekts (Att) sowie einer Dämpfungsspektralfunktion des Referenzobjekts ($Att_{ref}$) umfasst.

6. Verfahren nach einem der Ansprüche 2 bis 5, wobei Schritt e) umfasst:

   - Festlegen einer Antwortmatrix ($F_k$) aus den Streufunktionen $(f_k^X)$, die mit jedem Pixel ($20_k$) assoziiert sind;
   - Festlegen einer Dispersionsmatrix (G) aus den Dispersionsfunktionen ($g_k$), die mit jedem Pixel ($20_k$) assoziiert sind;

   - Schätzen einer Matrix ($F_z$), welche die Streusignaturen $(f_z^X)$ jedes Elementarvolumens ($V_z$) umfasst, so dass das Matrixprodukt der Dispersionsmatrix (G) mit der Matrix der Streusignaturen jedes Elementarvolumens ($F_Z$) im Wesentlichen der Antwortmatrix ($F_k$) entspricht.

7. Verfahren nach einem der vorhergehenden Ansprüche, wobei die Dispersionsfunktion ($g_k$), die mit einem Pixel ($20_k$) assoziiert ist, ausgearbeitet wird, indem ein Kalibrierungsobjekt ($10_c$) aufeinanderfolgend in verschiedene Positionen (z) entlang der Ausbreitungsachse ($12_z$) gesetzt wird, und indem in jeder Position die folgenden Schritte durchgeführt werden:

   i) Bestrahlen des Kalibriermaterials ($10_c$) und Erfassen, durch das Pixel ($20_k$), eines Spektrums, das als Kalibrierungsspektrum $(S_{k,c,z}^E)$ der Strahlung bezeichnet wird, die durch das in die Position (z) gesetzte Kalibrierungsobjekt gestreut wird;

   ii) auf jedem Kalibrierungsspektrum $(S_{k,c,z}^E)$, Identifizieren eines Kalibrierungspeaks, der für das Kalibrierungsobjekt ($10_c$) charakteristisch ist;
   iii) Bestimmen der Intensität ($I_{k,c,z}$) des Kalibrierungspeaks;

   wobei die Dispersionsfunktion ($g_k$) aus verschiedenen Intensitäten ($I_{k,c,z}$) jeweils erhaltener Kalibrierungspeaks für das Pixel ($20_k$) in jeder Position (z) des Kalibrierungsobjekts ($10_c$) erhalten wird.

8. Verfahren nach einem der vorhergehenden Ansprüche, wobei Schritt f), für jedes Elementarvolumen ($V_z$), ein Vergleichen zwischen der Streusignatur $(f_z^X)$, die mit dem Elementarvolumen assoziiert ist, und die in Schritt e) erhalten wird, mit zuvor festgelegten Streusignaturen $(f_i^X)$ umfasst, die jeweils einem bekannten Material ($10_i$) entsprechen.

9. Verfahren nach einem der vorhergehenden Ansprüche, wobei die Pixel ($20_k$) virtuelle Pixel sind, die durch eine Überpixelisierung physikalischer Pixel eines Detektors (20) erhalten werden.

10. Träger zum Aufzeichnen von Informationen, welcher von einem Prozessor gelesen werden kann, umfassend Instruktionen zur Ausführung eines Verfahrens nach einem der Ansprüche 1 bis 9, wobei diese Instruktionen geeignet sind, von einem Prozessor (22) ausgeführt zu werden.

11. Vorrichtung zur Analyse eines Objekts (10), umfassend:

   - eine Strahlungsquelle (11), welche geeignet ist, eine ionisierende elektromagnetische Strahlung (12) zu erzeugen, die sich zu einem Träger ($10_s$) ausbreitet, der geeignet ist, das Objekt (10) aufzunehmen;

- einen ersten Kollimator (30), der zwischen der Strahlungsquelle und dem Träger ($10_s$) angeordnet ist, wobei der erste Kollimator eine Öffnung (32) aufweist, die geeignet ist, einen kollimierten Strahl ($12_c$) zu bilden, der sich in einer Ausbreitungsachse ($12_z$) zum Träger ($10_s$) ausbreitet;
- einen zweiten Kollimator (40), der zwischen dem Träger ($10_s$) und einem Detektor (20) angeordnet ist, wobei der zweite Kollimator eine Öffnung (42) aufweist, die sich zwischen dem Träger ($10_s$) und dem Detektor (20) in einer Mittelachse (45) erstreckt, die in Bezug auf die Ausbreitungsachse ($12_z$) geneigt ist;
- den Detektor (20), umfassend Pixel ($20_k$), wobei jedes Pixel geeignet ist, eine durch das Objekt (10) gestreute elektromagnetische Strahlung ($14_\theta$) quer durch die Öffnung (42) zu detektieren, und ein Energiespektrum zu erfassen, das als Streuspektrum $\left(S_k^E\right)$ bezeichnet wird;

**dadurch gekennzeichnet, dass**

- die Vorrichtung einen Mikroprozessor (22) umfasst, der ausgelegt ist, ausgehend von dem Streuspektrum $\left(S_k^E\right)$, das für jedes Pixel ($20_k$) erfasst wird, die Schritte d) bis f) des Verfahrens nach einem der Ansprüche 1 bis 9 durchzuführen.

**12.** Vorrichtung zur Analyse eines Objekts nach Anspruch 11, wobei die Mittelachse (45) einen Winkel (Θ), der als Kollimationswinkel bezeichnet wird, in Bezug auf die Ausbreitungsachse ($12_z$) bildet, wobei dieser Winkel streng größer als 0° und kleiner als 20° ist.

**13.** Vorrichtung zur Analyse eines Objekts (10) nach einem der Ansprüche 11 oder 12, ebenso umfassend einen Hilfs-detektor ($20_0$), der geeignet ist, ein als Übertragungsspektrum bezeichnetes Spektrum einer Strahlung zu erfassen, die vom auf dem Träger ($10_s$) gehaltenen Objekt in der Ausbreitungsachse ($12_z$) übertragen wird.

**Claims**

**1.** Method for analysing an object (10) comprising the following steps:

a) placing the object (10) facing a source (11) of irradiation emitting ionising electromagnetic radiation and irradiating the object using said source, through a first collimator (30), so as to form a collimated incident beam ($12_c$) propagating towards the object (10) along a propagation axis ($12_z$);

b) placing a detector (20) comprising a plurality of pixels ($20_k$), so that each pixel is able to detect radiation ($14_\theta$) scattered by the object thus irradiated, said scattered radiation ($14_\theta$) propagating in a direction making an acute angle, called the scattering angle (θ), to said propagation axis ($12_z$);

c) acquiring, with a plurality of pixels ($20_k$) of the detector, a scattering spectrum $\left(S_k^E\right)$ representative of an energy distribution of said scattered radiation ($14_\theta$), each scattering spectrum being associated with one pixel ($20_k$);

d) decomposing the object into elementary volumes ($V_z$) and associating, with each pixel ($20_k$), a dispersion function ($g_k$), the value of which, for each elementary volume, represents a contribution of said elementary volume to the scattered radiation ($14_\theta$) detected by each pixel ($20_k$);

e) on the basis of the acquired scattering spectra $\left(S_k^E\right)$ and of the dispersion functions ($g_k$) associated with each pixel ($20_k$), determining a scattering signature $\left(f_z^\chi\right)$ associated with each elementary volume ($V_z$), said signature being representative of a material forming said elementary volume;

f) on the basis of the scattering signatures $\left(f_z^\chi\right)$ associated with each elementary volume ($V_z$), estimating a nature of the material forming the various elementary volumes ($V_z$) of the object.

**2.** Method according to Claim 1, wherein step e) includes, on the basis of the scattering spectrum $\left(S_k^E\right)$ acquired by each pixel ($20_k$), determining a scattering function $\left(f_k^\chi\right)$ associated with said pixel, said function being obtained by combining said scattering spectrum $(S_k^E)$ with a reference spectrum $(S_{k,ref}^E)$ acquired by said pixel $(20_k)$ while a reference material is placed $(10_{ref})$ in the place of the object (10).

3. Method according to Claim 2, wherein the determination of said scattering function $(f_k^\chi)$ associated with each pixel $(20_k)$ includes taking into account what is called a reference scattering function $(f_{k,ref}^\chi)$, which is established, for said pixel, relatively to said reference material $(10_{ref})$.

4. Method according to Claim 3, wherein the determination of said scattering function $(f_k^\chi)$ associated with each pixel $(20_k)$ includes the establishment of a ratio, term by term, of the scattering spectrum $(S_k^E)$, acquired by said pixel, to said reference spectrum $(S_{k,ref}^E)$, the ratio being multiplied, term by term, by said reference scattering function $(f_{k,ref}^\chi)$ established for said pixel.

5. Method according to any one of claims 2 to 4, wherein step e) includes taking into account an attenuation spectral function of the object (*Att*) and an attenuation spectral function of said reference object (*Att$_{ref}$*).

6. Method according to any one of claims 2 to 5, wherein step e) includes:

   - establishing a response matrix ($F_k$) on the basis of the scattering functions $(f_k^\chi)$ associated with each pixel $(20_k)$;
   - establishing a dispersion matrix ($G$) on the basis of the dispersion functions ($g_k$) associated with each pixel ($20_k$);
   - estimating a matrix ($F_z$) including the scattering signatures $(f_z^\chi)$ of each elementary volume ($V_z$), in such a way that the matrix product of said dispersion matrix ($G$) by said matrix of scattering signatures of each elementary volume ($F_z$) substantially corresponds to said response matrix ($F_k$).

7. Method according to any one of the preceding claims, wherein said dispersion function ($g_k$) associated with a pixel $(20_k)$ is elaborated by placing a calibration object ($10_c$) successively in various positions (*z*), along said propagation axis ($12_z$), and by carrying out, in each position, the following steps:

   i) irradiating said calibrating material ($10_c$) and acquiring, with said pixel ($20_k$), a spectrum, called the calibration spectrum $(S_{k,c,z}^E)$, of the radiation scattered by said calibration object placed in said position (z);

   ii) in each calibration spectrum $(S_{k,c,z}^E)$, identifying a calibration peak that is characteristic of said calibration object ($10_c$); and
   iii) determining the intensity ($I_{k,c,z}$) of said calibration peak;

   the dispersion function ($g_k$) being obtained on the basis of the various intensities ($I_{k,c,z}$) of the calibration peaks respectively obtained, for said pixel ($20_k$), in each position of the calibration object ($10_c$).

8. Method according to any one of the preceding claims, wherein step f) includes, for each elementary volume ($V_z$), a comparison between the scattering signature $(f_z^\chi)$ associated with said elementary volume, which signature is obtained in step e), with pre-established scattering signatures $(f_i^\chi)$ each corresponding to a known material ($10_i$).

9. Method according to any one of the preceding claims, wherein the pixels ($20_k$) are virtual pixels obtained by a sur-pixelation of physical pixels of the detector (20).

10. Processor-readable data storage medium including instructions for executing a method according to any one of the Claims 1 to 9, these instructions being able to be executed by a processor (22).

11. Device for analysing an object (10) including:

    - a source of irradiation (11), able to produce ionising electromagnetic radiation (12) propagating towards a holder ($10_s$) able to receive said object (10);
    - a first collimator (30), placed between the source of irradiation and the holder ($10_s$), the first collimator having an aperture (32) able to form a collimated beam ($12_c$) propagating along a propagation axis ($12_z$), towards the holder ($10_s$);
    - a second collimator (40), placed between the holder ($10_s$) and a detector (20), the second collimator having an aperture (42) extending between said holder ($10_s$) and said detector (20), along a median axis (45) that is inclined with respect to said propagation axis ($12_z$);
    - the detector (20) comprising pixels ($20_k$), each pixel being able to detect electromagnetic radiation ($14_\theta$) scattered by the object (10) through said aperture (42), and to acquire an energy spectrum that is called the scattering spectrum $(S_k^E)$;

**characterised in that**

    - the device includes a microprocessor (22) configured to carry out, on the basis of the scattering spectrum $(S_k^E)$ acquired by each pixel ($20_k$), steps d) to f) of the method according to any one of Claims 1 to 9.

12. Device for analysing an object according to Claim 11, wherein the median axis (45) makes an angle ($\theta$), called the collimating angle, to the propagation axis ($12_z$), this angle being strictly larger than 0° and smaller than 20°.

13. Device for analysing an object according to either of Claims 11 and 12, also including an auxiliary detector ($20_0$) able to acquire a spectrum of radiation transmitted by the object, called the transmission spectrum, held on the holder ($10_s$), along the propagation axis ($12_z$).

**Fig. 1A**

**Fig. 1B**

$E$ (keV)

$\chi$ (nm$^{-1}$)

**Fig. 1C**

$E$ (keV)

$$E = \frac{hc\chi}{sin\left(\frac{\theta_k}{2}\right)}$$

$\chi$ (nm$^{-1}$)

**Fig. 1D**

100

$S_k^E$

120 $\longleftarrow S_{k,ref}^E$

$S'^E_k$

140 $\longleftarrow f_{k,ref}^\chi \; Att, Att_{ref}$

$f_k^\chi$

160 $\longleftarrow g_z$

$f_z^\chi$

180 $\longleftarrow f_i^\chi$

$\gamma_z$

**Fig. 2**

**Fig. 3A**

**Fig. 3B**

**Fig. 3C**

**Fig. 3D** $I_{k,c,z}$

**Fig. 3E**

**Fig. 4A**

**Fig. 4B**

**Fig. 4C**

**Fig. 4D**

**Fig. 4E**

**Fig. 4F**

**Fig. 4G**

**EP 3 185 003 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013098520 A
- WO 2016001536 A

- WO 2014045045 A

**Littérature non-brevet citée dans la description**

- **MONTEMONT et al.** Studying spatial resolution of CZT detectors using sub-pixel positioning for SPECT. *IEEE transactions on nuclear science,* Octobre 2014, vol. 61 (5